# EUROPÄISCHE PATENTSCHRIFT

(11) **EP 2 539 219 B1**
(45) Veröffentlichungstag und Bekanntmachung des Hinweises auf die Patenterteilung: **16.04.2014**
(21) Anmeldenummer: 11707082.1
(22) Anmeldetag: 19.02.2011
(51) Int. Cl.: F03D 1/00, B63B 1/10, B63B 35/00, F03D 11/04, B63B 43/04, E02B 17/00

(54) **VORRICHTUNG ZUM TRANSPORT UND INSTALLIEREN VON EINER FLACHGRÜNDUNG UMFASSENDEN ANORDNUNG EINER OFFSHORE-WINDENERGIEANLAGE SOWIE VERFAHREN ZUM TRANSPORT UND ZUR INSTALLATION EINER SOLCHEN ANORDNUNG MIT FLACHGRÜNDUNG**
DEVICE FOR TRANSPORTING AND INSTALLING AN ARRANGEMENT OF AN OFFSHORE WIND TURBINE COMPRISING A RAFT FOUNDATION AND METHOD FOR TRANSPORTING AND INSTALLING SUCH AN ARRANGEMENT HAVING A RAFT FOUNDATION
DISPOSITIF POUR LE TRANSPORT ET L'INSTALLATION D'UN AGENCEMENT D'UNE ÉOLIENNE OFFSHORE COMPRENANT UNE EMBASE ET PROCÉDÉ POUR LE TRANSPORT ET L'INSTALLATION D'UN TEL AGENCEMENT MUNI D'UNE EMBASE

(30) Priorität: 26.02.2010 DE 102010009466
(43) Veröffentlichungstag der Anmeldung: 02.01.2013
(73) Patentinhaber: STRABAG Offshore Wind GmbH, 70567 Stuttgart (DE)
(72) Erfinder: WEBER, Klaus, 72366 Balingen (DE)
(74) Vertreter: Riedel, Peter
(86) Internationale Anmeldenummer: PCT/EP2011/000806
(87) Internationale Veröffentlichungsnummer: WO 2011/103988

(56) Entgegenhaltungen:
- WO-A1-03/066427
- WO-A2-2010/028762
- US-A1- 2003 192 465

## Beschreibung

Die Erfindung betrifft eine Vorrichtung zum Transport und Installieren von eine Flachgründung umfassende Anordnung einer Offshore-Windenergieanlage gemäß dem Oberbegriff des Anspruchs 1 sowie ein Verfahren zum Transport und zur Installation einer solchen Anordnung der im Oberbegriff des Anspruchs 12 angegebenen Gattung.

Die Komponenten von Offshore-Windenergieanlagen werden auf schwimmenden Plattformen oder Schiffen an den Bestimmungsort im Offshore-Bereich gebracht. Mit Hilfe von Kranschiffen werden die Gründungen der Windenergieanlagen auf den Meeresboden abgesenkt, danach der Mast aufgebaut und schließlich an der Mastspitze das Maschinengehäuse mit dem Rotor installiert. Die Aufstellung der Gründung und Installation der Windenergieanlage wird bei stärkerem Wellengang erheblich behindert, und bei hohem Seegang müssen die Arbeiten vollständig eingestellt werden. Damit ist die Errichtung von Offshore-Windenergieanlagen lediglich auf das Sommerhalbjahr beschränkt und auch in dieser Zeit nur bei entsprechend ruhiger See möglich.

Da der Bedarf an erneuerbarer Energie ständig steigt, wird auch in Zukunft die Anzahl von Offshore-Windenergieanlagen erheblich zulegen. In diesem Zusammenhang wird angestrebt, das Fundament zumindest mit dem unteren Maststück an den Bestimmungsort zu transportieren, idealerweise jedoch die komplett montierte Windenergieanlage von einer Produktionsstätte zu dem Bestimmungsort im Offshore-Bereich zu fahren und dort auf geeignete Weise zu installieren.

Aus der DE 699 27 791 T2 ist ein Verfahren zum Transport einer Windenergieanlage und deren Installation am Bestimmungsort bekannt. Dieses Dokument offenbart den Oberbegriff des Anspruchs 1. Dabei wird die Fundamentmontage auf einem Verschiffungsfrachtkahn ausgeführt, und auf das Fundament werden ein Säulenfuß und ein Windenergieanlagenturm aufgesetzt. Danach wird ebenfalls auf dem Verschiffungskahn am oberen Ende des Windenergieanlagenturms die Maschinenanlage und daran der Rotor montiert. Die Windenergieanlage wird dann mittels des von einem Schlepper gezogenen Verschiffungskahns zum Bestimmungsort transportiert. Am Bestimmungsort wird mit Hilfe eines Schwimmkrans die komplette Windenergieanlage angehoben, so dass der Verschiffungskahn unter der Windenergieanlage hinweg bewegt werden kann. Danach wird mittels des Schwimmkrans die Windenergieanlage abgesenkt und auf dem Meeresboden abgesetzt.

Aus WO 03/066427 A1 ist ein Transportschiff für eine Windenergieanlage mit einem Fundament bekannt. Dieses Transportschiff dient auch zum Installieren dieser Vorrichtung auf dem Meeresboden. Das Transportschiff besteht aus zwei sich parallel zueinander erstreckenden Rümpfen und quer zu diesen verlaufenden Balkengerüsten, die die Rümpfe verbinden. Zwischen den Rümpfen ist benachbart zu jedem Ende ein Aufnahmeraum für das Fundament vorhanden und darüber eine Öffnung zur Aufnahme eines sich vertikal erstreckenden Fundamentschafts. Der Aufnahmeraum ist nach unten derart offen, dass das Fundament mit dem Fundamentschaft zwischen den Rümpfen hindurch vertikal nach unten abgelassen werden kann. Auf den Rümpfen befinden sich die Balkengerüste mit Haltevorrichtungen für den Fundamentschaft.

In der US 2003/192465 A1 ist ein tauchbarer Katamaran beschrieben, dessen parallele Rümpfe im Wasser absenkbar sind. Die Rümpfe sind im mittleren Bereich über ein Mittelteil verbunden, hinter dem eine Öffnung zwischen den Rümpfen gebildet ist.

In der älteren, nicht vorveröffentlichten WO 2010/028762 A2 ist eine Vorrichtung zum Transport und Installieren von eine Flachgründung umfassende Anordnung einer Offshore-Windenergieanlage bekannt. Diese Vorrichtung umfasst ein Transportschiff, das aus mindestens zwei sich parallel zueinander an Längsseiten erstreckenden Rümpfen und zwei sich quer zu diesen erstreckenden Aussteifungen, über die die Rümpfe miteinander verbunden sind, besteht. In dem Transportschiff ist ein Aufnahmeraum für die Flachgründung vorgesehen. Über dem Aufnahmeraum ist eine Öffnung vorhanden, in der ein auf der Flachgründung befindlicher und sich vertikal erstreckender Fundamentschaft aufnehmbar ist. Der Aufnahmeraum ist nach unten derart offen, dass die Flachgründung mit dem Fundamentschaft zwischen den Rümpfen hindurch vertikal nach unten ausbringbar ist. Auf den Rümpfen sind Türme angeordnet.

Die DE 100 21 163 B4 beschreibt ein Wasserfahrzeug zum Versorgen einer Offshore-Windanlage mit einem Schiffskörper, der über vier Tragsäulen mit zwei parallel zur Fortbewegungsrichtung verlaufenden Auftriebstanks verbunden ist. Mittels Hub- und Senkeinrichtungen für die Tragsäulen können die Auftriebstanks in ihrer Lage zum Schiffskörper vertikal verfahren werden, so dass das Wasserfahrzeug auf dem Meeresboden abgesetzt werden kann. Zum Transport von Windenergieanlagen und deren Installation am Bestimmungsort im Offshore-Bereich ist ein solches Wasserfahrzeug nicht geeignet.

Der vorliegenden Erfindung liegt daher die Aufgabe zugrunde, eine Vorrichtung zum Transport und Installieren von einer eine Flachgründung umfassenden Anordnung einer Offshore-Windenergieanlage der gattungsgemäßen Art zu schaffen, durch die die Errichtung von Offshore-Windenergieanlagen und deren Gründungen wesentlich vereinfacht wird und auch bei höherem Seegang durchgeführt werden kann. Außerdem liegt der Erfindung die Aufgabe zugrunde, ein Verfahren zum Transport und zur Installation einer Anordnung mit Flachgründung mittels einer solchen Vorrichtung anzugeben.

Diese Aufgabe wird bezüglich der Vorrichtung durch die Merkmale des Anspruchs 1 und bezüglich des Verfahrens durch die Merkmale des Anspruchs 9 gelöst.

Die im Anspruch 1 angegebene Vorrichtung zum Transport und Installieren der Anordnung insbesondere einer kompletten Windenergieanlage kann als Transportschiff bezeichnet werden, das für den Transit der Anordnung auf einen für den Transit günstigen Tiefgang abgesenkt werden kann.

Ein wesentlicher Vorteil der Erfindung wird darin gesehen, dass Offshore-Windenergieanlagen weitgehend unabhängig von der Witterung und dem Seegang auf dem Meeresgrund installiert werden können. Ein weiterer Vorteil besteht darin, dass die Komponenten nicht am Bestimmungsort zusammen gesetzt werden müssen, sondern die Windenergieanlage komplett an Land gefertigt werden kann und mit einem Transportschiff bei optimalem Tiefgang für den Transport als Einheit zum Bestimmungsort transportiert und dort installiert wird. Es sind hierfür keine weiteren Gerätschaften erforderlich wie Schwimmkräne oder dgl. Das Transportschiff verfügt über zwei parallel zueinander an Längsseiten angeordnete Rümpfe und entspricht somit der Bauart eines Katamarans. Gemäß der Erfindung sind auf jedem Rumpf mindestens zwei Türme angeordnet, wobei diese Türme mindestens zwei Decks tragen. Durch diese Anordnung der Türme wird ein großer Aufnahmeraum für die Flachgründung gebildet. Erfindungsgemäß ist unter einem Hauptdeck ein Arbeitsdeck angeordnet, wobei das Arbeitsdeck mit einer Haltevorrichtung für den Fundamentschaft und einer Hebevorrichtung für die Flachgründung ausgestattet ist. Die Haltevorrichtung für den Fundamentschaft dient dazu, diesen in horizontaler Richtung zu fixieren. Die Hebevorrichtung wird mit der Flachgründung verbunden und dient dazu, die Flachgründung von einer Pier anzuheben sowie am Bestimmungsort die Flachgründung abzulassen und auf dem Meeresboden abzusetzen. Die Hebevorrichtungen sind als Flaschenzüge ausgebildet.

Gemäß einer vorteilhaften Weiterbildung der Erfindung weisen die Rümpfe über einen Teil ihrer Länge eine Oberkante auf, die niedriger angeordnet ist als die Oberkanten der Enden der Rümpfe. Da das Transportschiff als Halbtaucher ausgebildet ist und somit für den Transit der Anordnung bzw. Windenergieanlage auf einen Transport-Tiefgang abgesenkt wird, liegen die Rumpfabschnitte mit niedrigerer Oberkante unterhalb der Wasseroberfläche, so dass die Wellen nicht gegen die mittleren Abschnitte der Rümpfe schlagen, sondern über diese hinweg laufen. Die Enden der Rümpfe hingegen ragen während des Transits über die Wasseroberfläche hinaus. Die Rümpfe sind während des Transports größtenteils unter der Wasserlinie, wodurch der Angriffsquerschnitt des Transportschiffs im Seegang minimiert ist. Die Wellen laufen zum Großteil durch den Schiffskörper hindurch, ohne Kräfte auf diesen auszuüben. Dadurch werden die Bewegungen und Beschleunigungen infolge des Seegangs minimiert und der stehende Transport einer Windenergieanlage verbessert.

Es ist darüber hinaus vorteilhaft, dass das Transportschiff absenkbar ist und die Türme eine Höhe aufweisen, die größer ist als eine maximale Absenktiefe des Transportschiffs. Somit ist auch bei maximaler Absenkung des Transportschiffs gewährleistet, dass bestimmte Decks stets ausreichend über der Wasseroberfläche liegen.

Die Öffnung für die Aufnahme des Fumdamentschafts ist vorzugsweise eine im Arbeitsdeck angeordnete und sich in Längsrichtung des Transportschiffs erstreckende U-förmige Öffnung, die zu einer Querseite des Arbeitsdecks offen ist. Durch Relativbewegung des Transportschiffs, bezogen auf die Windenergieanlage kann der Fundamentschaft in diese U-förmige Öffnung eingeführt werden. Die Haltevorrichtung umfasst vorzugsweise eine Vielzahl von gleichmäßig um einen Kreismittelpunkt angeordnete hydraulisch betätigbare Zylinder. Diese Zylinder werden zur Fixierung des Fundamentmasts radial auf diesen hin bewegt, bis das vordere Ende der Kolbenstangen, an denen vorzugsweise Rollen angeordnet sind, einen geringen Abstand zum Fundamentmast aufweisen oder kraftlos an diesem anliegen.

In weiterer Ausgestaltung der Erfindung sind in den Rümpfen und/oder Türmen flutbare Tanks angeordnet sowie Ventilmittel und Pumpen zum Fluten und Abpumpen vorgesehen. Damit ist auf einfache Weise das Transportschiff auf einen Transporttiefgang absenkbar, d. h. bei dem Transportschiff handelt es sich um einen so genannten Halbtaucher. Des Weiteren dienen die flutbaren Tanks zur weiteren Absenkung des Transportschiffs während der Installation der Windenergieanlage auf dem Meeresboden. Für das exakte Positionieren während des Absenkens der Flachgründung mittels der Hebevorrichtung ist es zweckmäßig, dass in den Rümpfen vertikal verfahrbare Stützen angeordnet sind, die am Bestimmungsort aus den Rümpfen vertikal nach unten ausgefahren werden und zum Abstützen des Transportschiffs auf dem Meeresboden dienen. Die Stützen können auch so angeordnet sein, dass sie schräg nach unten ausfahrbar sind, so dass sie im ausgefahrenen Zustand eine größere Fläche überspannen und somit Horizontalkräfte besser aufnehmen. Bei ruhiger See kann auf das Ausfahren der Stützen für den Absetzvorgang der Flachgründung mit Mast ggf. verzichtet werden. Um eine möglichst exakte Positionierung sowohl beim Aufnehmen der Windenergieanlage als auch bei deren Installation am Bestimmungsort zu ermöglichen, verfügt das Transportschiff über eigene Antriebe an jedem Rumpf.

Zur Unterstützung des Abtauchens des Transportschiffs und zur Erhöhung der Standsicherheit der Flachgründung kann es zweckmäßig sein, dass Hohlräume in der Flachgründung mit Sand gefüllt werden und dadurch der Ballast erhöht wird. Hierzu kann beispielsweise das Füllen der Hohlräume in der Flachgründung von einem zweiten Schiff aus über eine Zuführleitung erfolgen.

Ausführungsbeispiele der Erfindung sind nachstehend anhand der Zeichnung näher erläutert. In der Zeichnung zeigt:
- Fig. 1: eine an Land neben einem Hafenbecken montierte Windenergieanlage mit Fundamentmast und Maschinengehäuse mit Rotor,
- Fig. 2: einen Rand eines Hafenbeckens mit einer Fingerpier und ein Transportschiff im Schnitt,
- Fig. 3: in schematischer Darstellung eine stirnseitige Ansicht eines zwei seitliche Rümpfe umfassenden Transportschiffs mit Halte- und Hebevorrichtungen und daran gehaltenem Fundament,
- Fig. 4: eine Seitenansicht des Transportschiffs in Fig. 3,
- Fig. 5: eine Draufsicht auf ein Arbeitsdeck und seitliche Rümpfe des Transportschiffs,
- Fig. 6: eine Darstellung gemäß Fig. 2 mit auf der Fingerpier positionierter Windenergieanlage,
- Fig. 7: eine Darstellung gemäß Fig. 6, wobei eine Verbindung des Fundaments mit dem Transportschiff hergestellt ist,
- Fig. 8: eine Darstellung gemäß Fig. 7, wobei die Windenergieanlage von der Fingerpier abgehoben ist,
- Fig. 9: eine Darstellung des Transportschiffs mit Windenergieanlage während des Transits zum Bestimmungsort,
- Fig. 10: eine Darstellung des am Bestimmungsort eingetroffenen Transportschiffs mit vertikal nach unten ausgefahrenen Stützen,
- Fig. 11: das im Wasser abgesenkte und mittels der Stützen auf dem Meeresboden stehende Transportschiff,
- Fig. 12: eine Darstellung gemäß Fig. 11 mit auf den Meeresboden abgelassener Windenergieanlage,
- Fig. 13: die auf dem Meeresboden abgestellte Windenergieanlage und das aufgetauchte Transportschiff mit vertikal nach oben verfahrenen Stützen,
- Fig. 14: die Windenergieanlage mit einem durch nachlaufende Ballastierung gefüllten Fundamentschacht.

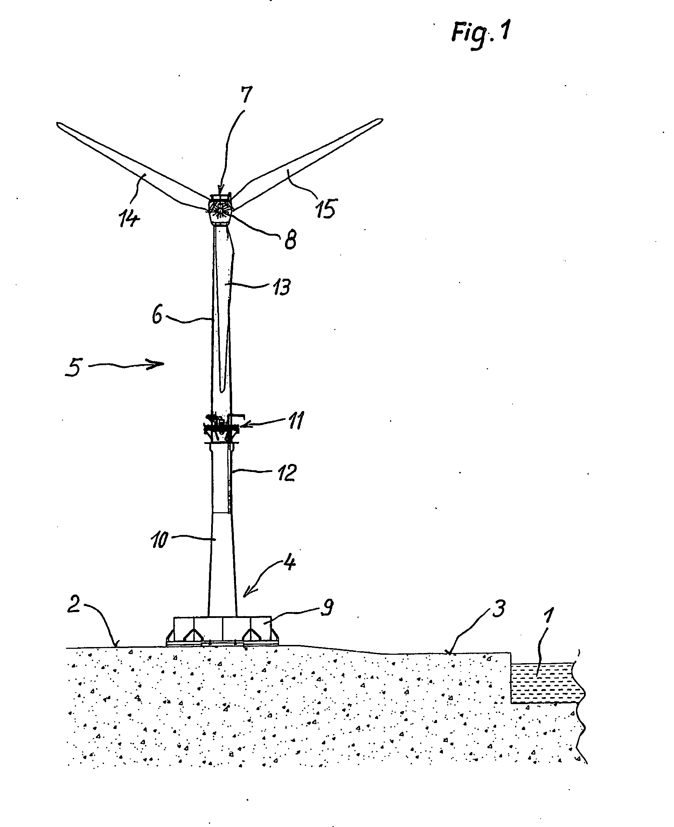

Die Fig. 1 zeigt einen Schnitt durch ein an ein Hafenbecken 1 angrenzendes Hafengelände 2 mit einer Pier 3, die bezogen auf das Hafengelände 2 ein niedrigeres Niveau aufweist. Auf dem Hafengelände 2 steht eine Windenergieanlage 5, die ein aus Beton gefertigtes Fundament 4, einen Mast 6 sowie ein Maschinengehäuse 7 mit Rotor 8 umfasst. Das Fundament 4 ist als Flachgründung 9 mit darauf befindlichem Fundamentschaft 10 ausgebildet und vorzugsweise mit Hohlräumen versehen. Auf dem oberen Ende des Fundamentschafts 10 ist der vorzugsweise aus Stahl gefertigte Mast 6 aufgesetzt, wobei im unteren Bereich des Mastes 6 an diesem eine Plattform 11 und am darunter befindlichen Abschnitt des Fundamentschaftes 10 eine Leiter 12 angeordnet sind. Am oberen Ende des Mastes 6 ist das Maschinengehäuse 7 montiert, dessen aus dem Maschinengehäuse hervorstehender Rotor 8 mit Rotorblättern 13, 14, 15 bestückt ist.

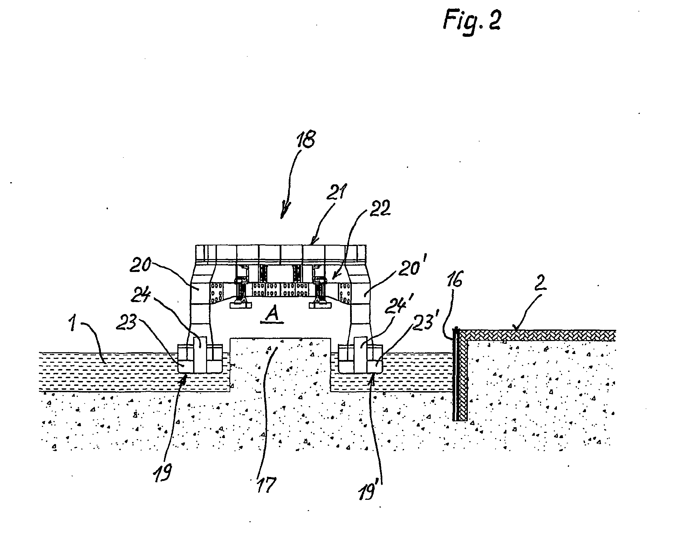

In Fig. 2 ist ein Schnitt durch das Hafenbecken 1 mit angrenzendem Hafengelände 2 und parallel zu einer Keimauer 16 verlaufender Fingerpier 17 gezeigt. An der Fingerpier 17 befindet sich ein Transportschiff 18, das als Vorrichtung zum Transport der in Fig. 1 gezeigten Windenergieanlage 5 dient. Das Transportschiff 18 umfasst zwei an Längsseiten angeordnete parallele Rümpfe 19, 19', die über quer zu den Rümpfen 19, 19' verlaufende Aussteifungen und ein von auf den Rümpfen stehenden Türmen 20, 20' getragenes Deck 21, sowie ein weiteres Deck 22 verbunden sind. Dabei handelt es sich um ein oberes Hauptdeck 21 und darunter befindliches Arbeitsdeck 22. Zwischen den Türmen 20, 20' ist über der Fingerpier 17 und unter dem Arbeitsdeck 22 ein Aufnahmeraum A gebildet. In den Rümpfen 19, 19' sind bedarfsweise flutbare Tanks 23,23' vorgesehen. Ferner sind in den Rümpfen 19, 19' vertikal verfahrbare Stützen 24, 24' angeordnet.

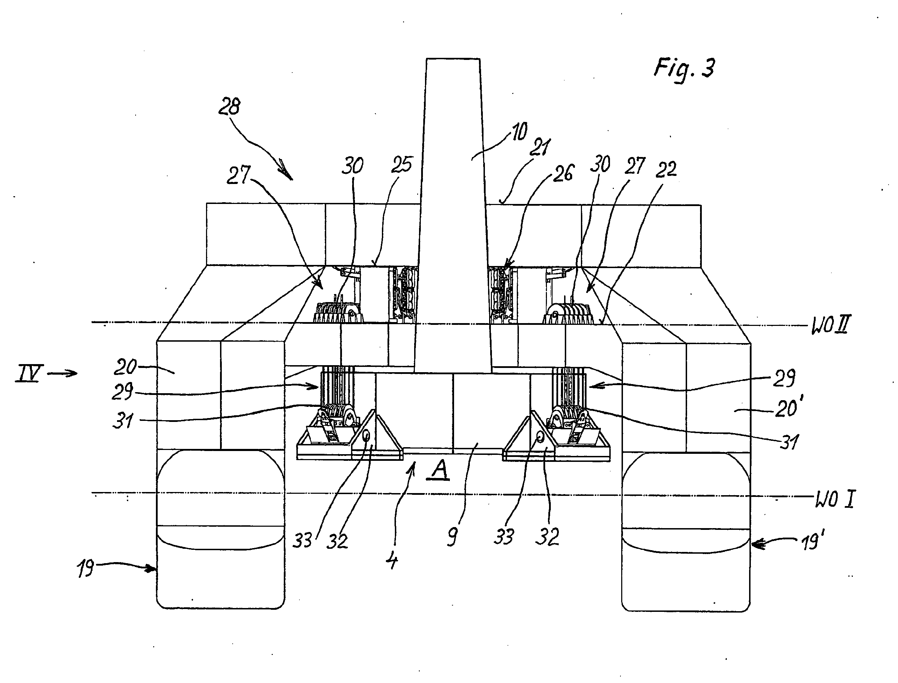

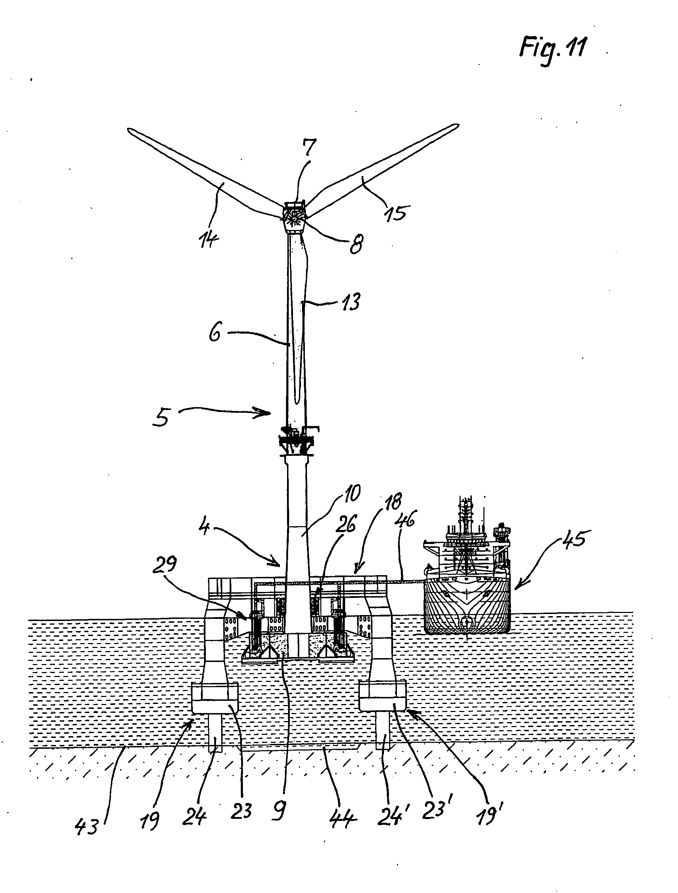

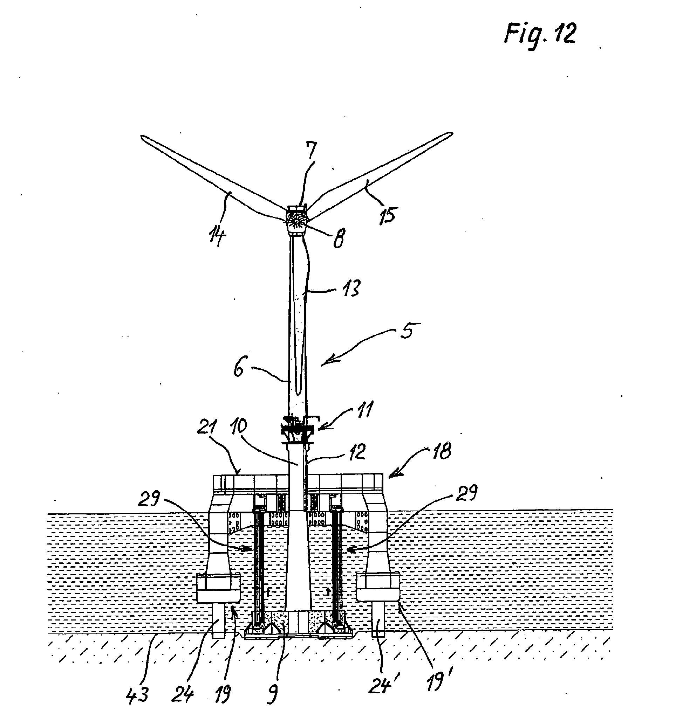

Die Fig. 3 zeigt eine stirnseitige Ansicht eines Transportschiffs 28, das ähnlich demjenigen in Fig. 2 ist und ebenfalls zwei Rümpfe 19, 19', auf diesen stehende Türme 20, 20' und ein Hauptdeck 21 und ein Arbeitsdeck 22 umfasst. Mit WO I ist das Niveau der Wasseroberfläche angegeben, das während des Transits der Windenergieanlage 5 zum Bestimmungsort gegeben ist, wobei das Transportschiff 18, bedingt durch die Last der Windenergieanlage 5 und durch zusätzlichen Ballast in den Rümpfen 19, 19', weiter ins Wasser eintaucht als beim Beladevorgang. Es handelt sich bei dem Transportschiff 28 um einen so genannten Halbtaucher. Mit WO II ist das Niveau der Wasseroberfläche bezeichnet, bis zu dem das Transportschiff 28 zur Installation der Windenergieanlage 5 am Bestimmungsort abgesenkt werden kann, worauf zu Fig. 11 und 12 noch eingegangen wird. Das Transportschiff 28 verfügt über eigene Antriebe für den Transit und zur Manövrierung, d. h. das Transportschiff kann aus eigener Kraft fahren und/oder sich auf einer bestimmten Position halten.

Zwischen den Türmen 20, 20' ist der Aufnahmeraum A gebildet, in dem sich gemäß Darstellung in Fig. 3 die Flachgründung 9 mit dem darauf angeordneten Fundamentschaft 10 befindet. Auf dem oberen Ende der Türme 20, 20' befindet sich das Hauptdeck 21 mit der Kommandozentrale, und unter dem Hauptdeck befindet sich ein weiteres Deck 25 für die Antriebe zur Stromerzeugung, Hydraulikeinrichtungen, Mannschaftsunterkünfte und weiteres. Darunter ist das Arbeitsdeck 22 angeordnet, auf dem eine Haltevorrichtung 26 zum Fixieren des Fundamentschaftes 10 in horizontaler Richtung und Hebevorrichtungen 27 zur vertikalen Bewegung des Fundaments 4 vorgesehen sind. Die Hebevorrichtungen 27 sind als Flaschenzüge 29 ausgebildet, deren obere Rollensätze 30 am Arbeitsdeck 22 aufgenommen und deren untere Rollensätze 31 über geeignete Eingriffsmittel mit der Flachgründung 9 verbindbar sind. Die Eingriffsmittel können beispielsweise hydraulisch betätigbare Bolzen sein, die in Öffnungen 33 in Stahlbetonwänden 32 an der Flachgründung 9 einführbar sind.

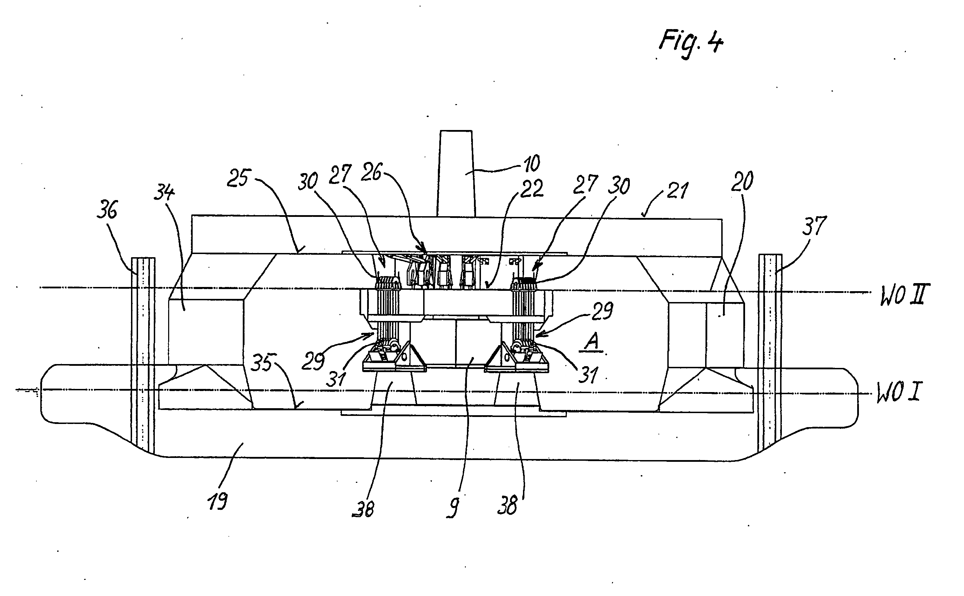

In Fig. 4 ist etwas verkleinert eine Seitenansicht des Transportschiffs 28 dargestellt, und zwar in Richtung des Pfeils IV in Fig. 3. Auf dem Rumpf 19 steht im vorderen und hinteren Bereich jeweils ein Turm 20, 34, eine gleiche Anordnung ist auf dem anderen, jedoch in Fig. 4 nicht sichtbaren Rumpf vorgesehen. Die insgesamt vier Türme tragen die Decks 21 und 25. Von den Türmen 20, 34 jeweils zum vorderen bzw. hinteren Ende des Transportschiffs 28 ist der Rumpf 19 etwas gegenüber seiner hauptsächlichen Länge angehoben gestaltet. Eine Oberkante 35 an der hauptsächlichen Länge des Rumpfs 19 bzw. auch des hier nicht sichtbaren Rumpfs 19' der Fig. 3 ist zwischen den Türmen 20, 34 niedriger als die Enden der Rümpfe, so dass die Enden während des Transits über der Wasseroberfläche WO I herausstehen, während der mittlere Abschnitt der Rümpfe unter dem Niveau WO I liegen und somit die Wellen darüber hinweg laufen. Oberhalb der Rümpfe 19 bzw. 19' und unterhalb des Arbeitsdecks 22 ist der Aufnahmeraum A gebildet, in dem sich die Flachgründung 9 befindet.

Etwa in der Mitte zwischen den Türmen 20, 34 befinden sich weitere Türme 38, zwischen denen ein Abstand besteht. Die Türme 38 tragen das Arbeitsdeck 22. Jeweils auf der dem Ende des Rumpfes 19 bzw. 19' zugewandten Seite der Türme 20, 34 sind in den Rümpfen vertikal verfahrbare Stützen 36, 37 angeordnet, wie diese bereits zu Fig. 2 mit dem Bezugszeichnen 24 erwähnt, doch dort anders gestaltet sind. Die Haltevorrichtung 26 und die Hebevorrichtungen 27 entsprechen denjenigen zu Fig. 3, so dass auch die Bezugszeichen für gleiche Teile mit denjenigen der Fig. 3 übereinstimmen.

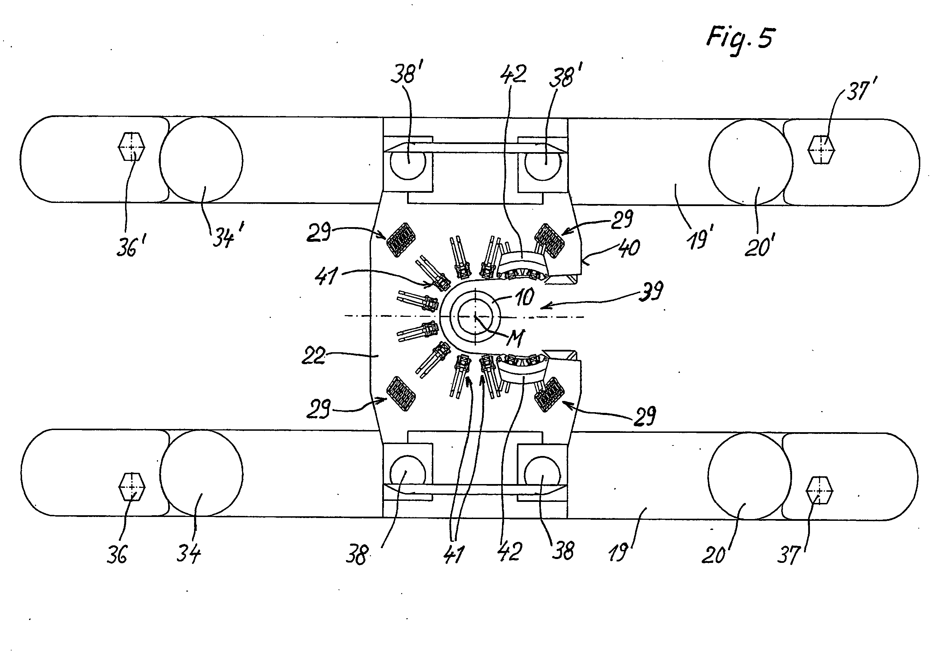

Die Fig. 5 zeigt die Ansicht auf das Arbeitsdeck 22 und die seitlichen parallelen Rümpfe 19, 19' des Transportschiffs 28. In Fig. 5 nicht dargestellt sind quer zu den Rümpfen 19, 19' angeordnete und die Rümpfe miteinander verbindende Aussteifungen. Benachbart des vorderen Endes der Rümpfe kann die Aussteifung unbeweglich befestigt sein. Am hinteren Ende muss die Aussteifung jedoch beweglich gelagert sein, um das Einführen und wieder Freigeben des Fundamentschafts zu ermöglichen. Aus der Darstellung in Fig. 5 ist ersichtlich, dass das Transportschiff 28 zusätzlich zu den vorderen Türmen 34, 34' und den hinteren Türmen 20, 20' auch über mittlere Türme 38, 38' verfügt, die das Arbeitsdeck 22 tragen. Jeweils benachbart zu den Türmen 20, 20', 34, 34' befinden sich die Stützen 36, 36', 37, 37', die im Ausführungsbeispiel einen sechseckigen Querschnitt besitzen. Alternativ sind auch andere Querschnitte möglich.

Das Arbeitsdeck ist mit einer in Längsrichtung des Transportschiffs 28 verlaufenden U-förmigen Öffnung 39 versehen, die zu einer Querseite 40 des Arbeitsdecks 22 offen ist, um den Fundamentschaft 10 aufzunehmen. Das innere Ende der U-förmigen Öffnung 39 ist kreisabschnittförmig gestaltet, wobei bezogen auf einen Kreismittelpunkt M die Haltevorrichtung 26 vorgesehen ist, die aus verschiedenen Richtungen gleichmäßig auf den Fundamentschaft 10 radial einwirkt. Eine solche Haltevorrichtung wird als "Gripper" bezeichnet. Die Haltevorrichtung 26 verfügt über eine Vielzahl von gleichmäßig über den Kreisumfang verteilt angeordnete hydraulisch betätigbare Zylinder 41, deren Kolbenstangen in radialer Richtung zum Fundamentschaft 10 verfahrbar sind und an ihren vorderen Enden Rollen aufweisen, die zur Fixierung des Fundamentschafts 10 in horizontaler Richtung im geringen Abstand zum Fundamentschaft 10 oder kraftlos an diesem anliegend positioniert werden. Um das seitliche Ein- bzw. Ausfahren des Fundamentschaftes 10 in die U-förmige Öffnung 39 zu ermöglichen, sind einige der Zylinder 41, im Ausführungsbeispiel je zwei, auf seitlich verschwenkbaren Backen 42 angeordnet. Die Haltevorrichtung umfasst vier Flaschenzüge 29, die jeweils diametral gegenüberliegend zum Mittelpunkt M angeordnet sind.

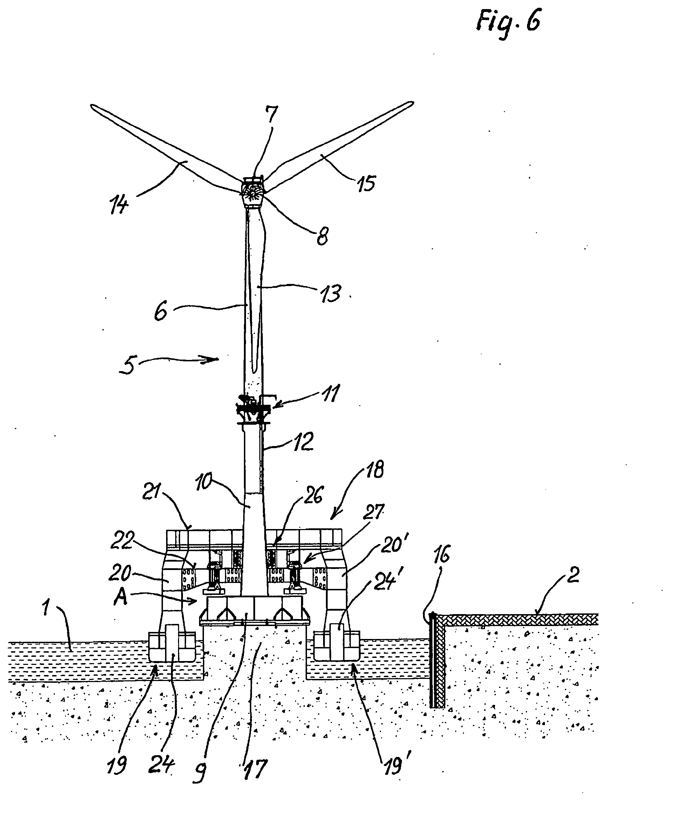

In Fig. 6 ist eine Darstellung des Transportschiffs 18 an der Fingerpier gemäß Fig. 2 gezeigt, wobei die Windenergieanlage 5 gemäß Fig. 1 auf die Fingerpier 17 verbracht wurde und dort abgestellt ist. Die Windenergieanlage 5 wird bezogen auf die Lastaufnahme des Transportschiffs 18 positioniert. Im Übrigen stimmen die Bezugszeichen für gleiche Teile mit denjenigen der Fig. 1 und 2 überein.

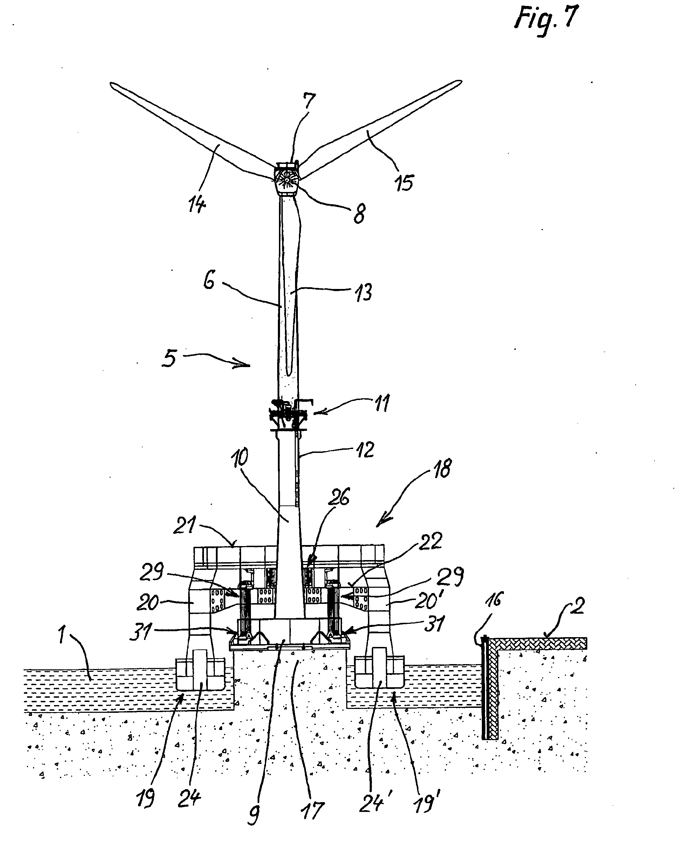

Die Fig. 7 zeigt eine Darstellung gemäß 6, jedoch in einer weiteren Phase des Ablaufs, nämlich dem Anschlagen des Fundaments 4 durch hierfür geeignete Mittel an den unteren Rollensätzen 31 der Flaschenzüge 29, die zur Fig. 3 näher beschrieben sind. Hierzu werden die unteren Rollensätze 31 der Flaschenzüge 29 herabgelassen, bis diese auf entsprechenden Anordnungen der Flachgründung 9 aufliegen. Dann erfolgt eine Verriegelung der Mittel an den unteren Rollensätzen 31 mit an der Flachgründung 9 angebrachten Stahlbetonwänden, wie dies zu Fig. 3 beschrieben ist. Für gleiche Teile stimmen die Bezugszeichen mit denjenigen der Fig. 1, 2 und 6 überein.

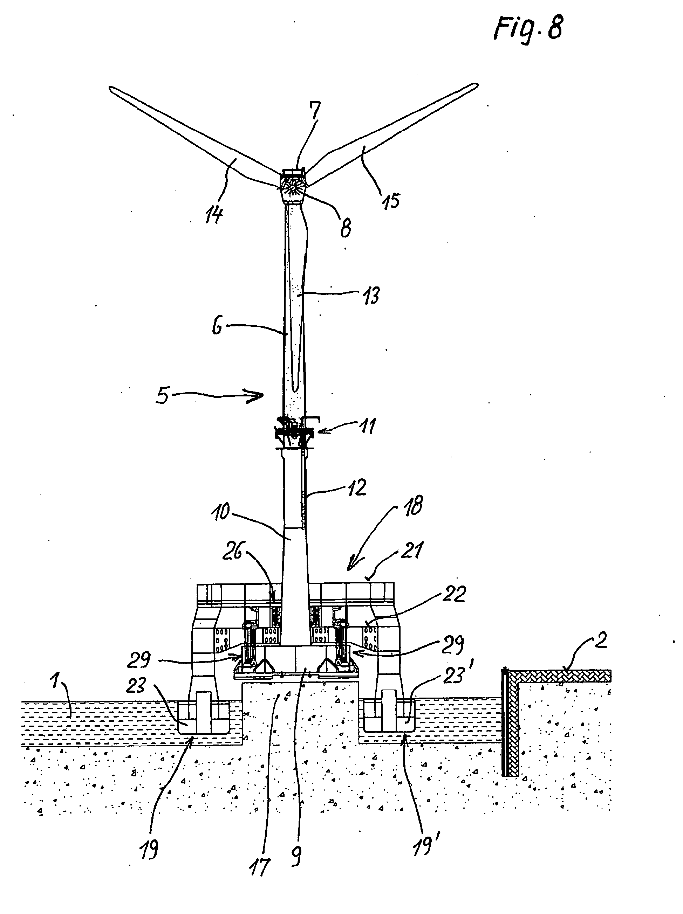

In der nächsten Phase des Verfahrens, die in Fig. 8 gezeigt ist, erfolgt ein Anheben des Fundaments 4 bzw. der gesamten Windenergieanlage 5 durch vertikale Bewegung der Flaschenzüge 29 nach oben, so dass die Last der Windenergieanlage 5 vollständig von dem Transportschiff 18 aufgenommen wird. Diese zusätzliche Last, die beispielsweise in der Größenordnung von 8.000 Tonnen liegen kann, hat zur Folge, dass das Transportschiff 18 weiter ins Wasser eintaucht. Wie aus Fig. 8 außerdem ersichtlich ist, befinden sich in diesem Zustand die Rümpfe 19, 19' in bestimmten Bereichen unterhalb der Wasseroberfläche. Wenn das Transportschiff 18 die Last der Windenergieanlage 5 vollständig übernommen hat und die Flachgründung 9 einen ausreichenden vertikalen Abstand zur Fingerpier 17 aufweist, werden die in Fig. 5 dargestellten Backen 42 geschlossen, und dann werden die Zylinder 41 aktiviert, so dass die Haltevorrichtung 26 den Fundamentschaft 10 horizontal fixiert. Nun kann das Transportschiff 18 mit der von diesem aufgenommenen Windenergieanlage 5 ablegen und die Fahrt zum Bestimmungsort in einem Offshore-Gebiet antreten.

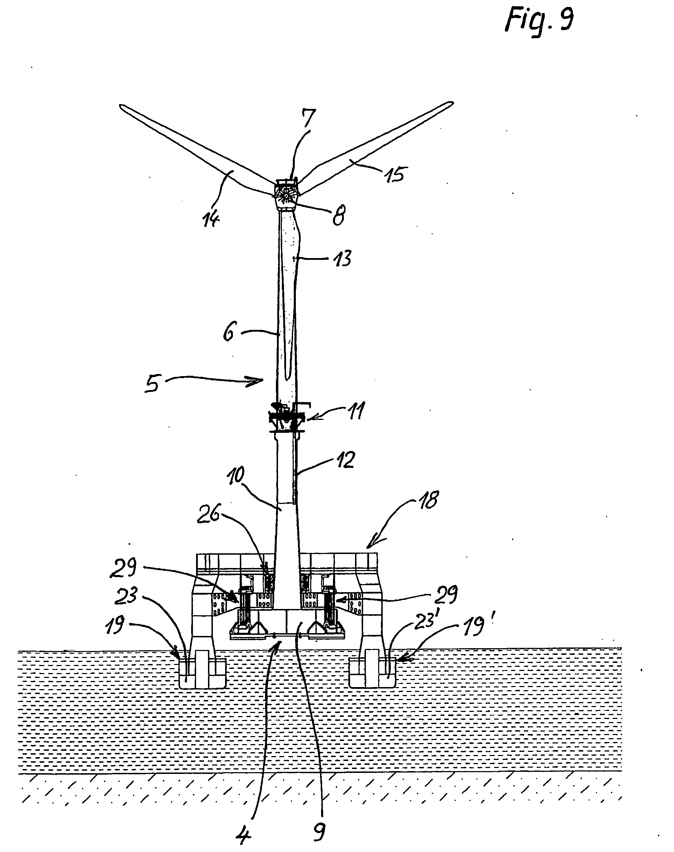

Die Fig. 9 zeigt das Transportschiff 18 mit der Windenergieanlage 5 während des Transits. Es ist aus Fig. 9 ersichtlich, dass die Rümpfe 19, 19' für den Transport zum Bestimmungsort noch weiter ins Wasser eintauchen, was beispielsweise durch teilweises Fluten von Tanks 23, 23' in den Rümpfen 19, 19' erfolgt. Zu diesem Transport-Tiefgang des Transportschiffs 18 wird auf die Darstellung in Fig. 4 und auf die Beschreibung verwiesen, woraus hervorgeht, dass die Oberkante 35 der mittleren Abschnitte der Rümpfe 19, 19' unter dem Niveau WO I der Wasseroberfläche liegt. Dadurch brechen Wellen zumindest über einen Teil der Gesamtlänge der Rümpfe 19, 19' nicht an der Seite der Rümpfe, sondern laufen über deren Oberkante 35 hinweg.

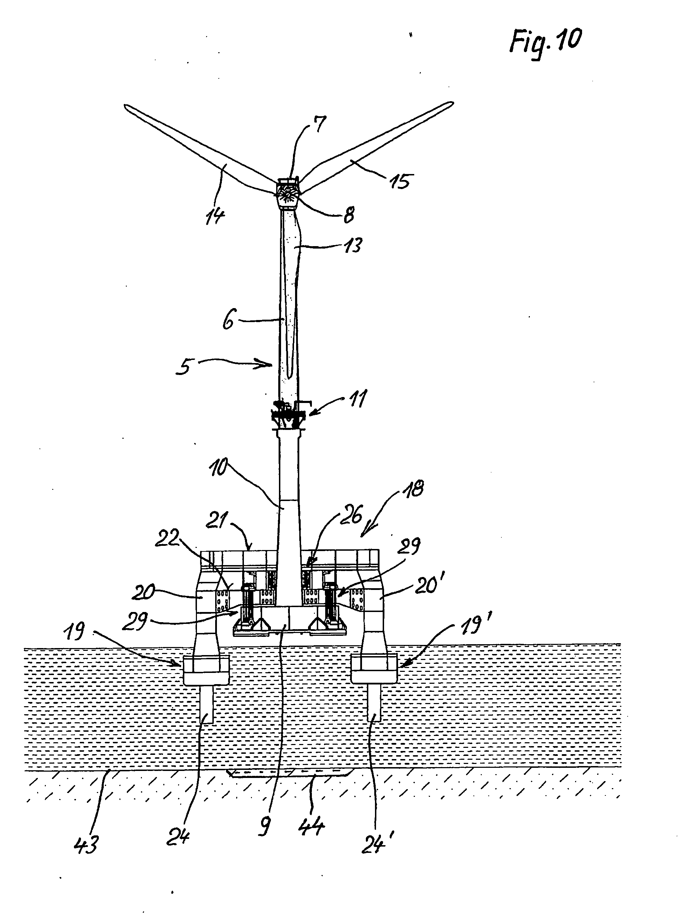

In Fig. 10 ist das am Bestimmungsort der Windenergieanlage 5 eingetroffene Transportschiff 18 gezeigt. Nach entsprechender Positionierung über dem vorgesehenen Standort für die Windenergieanlage 5 auf einem Meeresboden 43 werden insbesondere bei bewegter See die Stützen 24, 24' aus den Rümpfen 19, 19' vertikal nach unten ausgefahren, wie dies in Fig. 10 gezeigt ist. Selbstverständlich gilt Gleiches für die in dieser Darstellung nicht sichtbaren weiteren Stützen, die in Fig. 5 gezeigt sind. Im Übrigen stimmen für gleiche Teile die Bezugszeichen mit denjenigen in Fig. 7 überein. Aus Fig. 10 ist auch ersichtlich, dass an dem vorgesehenen Standort für die Flachgründung 9 eine flache Grube 44 am Meeresboden 43 vorbereitet sein kann.

Aus Fig. 11 ist ersichtlich, dass die Flachgründung 9 und der Fundamentschaft 10 vorzugsweise mit Hohlräumen versehen sind. Dies dient während des Transports zur Gewichtsreduzierung. Am Bestimmungsort wird zur Installation der Windenergieanlage 5 Ballast in Form von Sand in die Hohlräume der Flachgründung 9 eingebracht. Hierzu dient ein zweites Schiff 45, von dem aus über eine Zuführleitung 46 der Sand in die Hohlräume transportiert wird. Außerdem erfolgt die Flutung weiterer Tanks in den Rümpfen 19, 19' bzw. unteren Bereichen der Türme 20, 20', so dass der Auftrieb reduziert wird und das Transportschiff 18 mit der Windenergieanlage 5 weiter eintaucht, bis die Stützen 24, 24' auf dem Meeresboden 43 aufsetzen bzw. dabei ein Stück in diesen eindringen. Vor dem Aufsetzen erfolgt eine dynamische Positionierung des Transportschiffs 18, nach dem Aufsetzen der Stützen 24, 24' wird die Positionierung von diesen übernommen. In Fig. 11 ist die flache Grube 44 am Meeresboden 43 für die Flachgründung 9 des Fundaments 4 vorgesehen.

Die Fig. 12 zeigt eine Darstellung des Absetzens der Windenergieanlage 5 bzw. des Fundaments 4 auf dem Meeresboden 43 bzw. der vorbereiteten Grube 44. Hierzu werden die Flaschenzüge 29 betätigt und damit die vollständig mit Sand gefüllte Flachgründung 9 langsam abgesenkt, bis die Last der Windenergieanlage 5 vom Meeresboden 43 aufgenommen wird. Gleichzeitig erfolgt eine weitere Flutung von Hohlräumen in den Rümpfen 19, 19', um die Verbindung frei von Kräften zu machen. Nach vollständiger Kraftübernahme seitens des Meeresbodens und kräftefreier Verbindung werden die an den unteren Rollensätzen der Flaschenzüge angeordneten Bolzen aus den Öffnungen 33 in den Stahlbetonwänden 32 (vgl. Fig. 3) herausgezogen und damit die Flaschenzüge 29 von der Flachgründung 9 gelöst.

Während vorstehend zu Fig. 10 bis 12 der Absetzvorgang der Windenergieanlage bevorzugt bei rauher See oder ungünstigen Strömungsbedingungen beschrieben ist, kann alternativ bei ruhiger See der Absetzvorgang auch ohne die Stützen (24, 24') durchgeführt werden. Die aus den Schiffsbewegungen resultierende Vertikalbewegung an der Last d.h. der Windenergieanlage 5 wird mittels eines sogenannten "Active Heave Compensation Systems" kompensiert. Dieses Active Heave Compensation System besteht aus Hydraulikzylindern, welche im Bereich zwischen den in Fig. 3 gezeigten oberen Rollensätzen 30 und dem Arbeitsdeck 22 angebracht sind. Mittels dieser Hydraulikzylinder werden die oberen Rollensätze 30 samt den Flaschenzügen 29 und den unteren Rollensätzen 31, an denen wiederum die Last, also die Flachgründung 9 und der Fundamentschaft 10 befestigt sind, in vertikaler Richtung bewegt. Die Vertikalbewegung der Last kann durch das Active Heave Compensation System beim Absetzvorgang um bis zu 90% reduziert werden.

Die Reduzierung der vertikalen Bewegung der aus der Flachgründung 9 und dem Fundamentschaft 10 bestehenden Last ist notwendig, um ein kontrolliertes und weiches Aufsetzen der Last auf dem Meeresgrund sicherzustellen. Das Active Heave Compensation System kann also die aus den Schiffsbewegungen resultierende Vertikalbewegung an der Last bei Wetterbedingungen mit einer signifikanten Wellenhöhe von Hs=2,5 m um 90% reduzieren. Das heißt, die Installation der Windenergieanlage 5 kann bei Wetterbedingungen mit einer signifikanten Wellenhöhe von bis zu Hs=2,5 m durchgeführt werden.

Die horizontale Positionierung des Transportschiffs 18 während des Absetzvorgangs erfolgt über die Antriebe des Transportschiffs 18 unter Verwendung eines dynamischen Positionierungssystems.

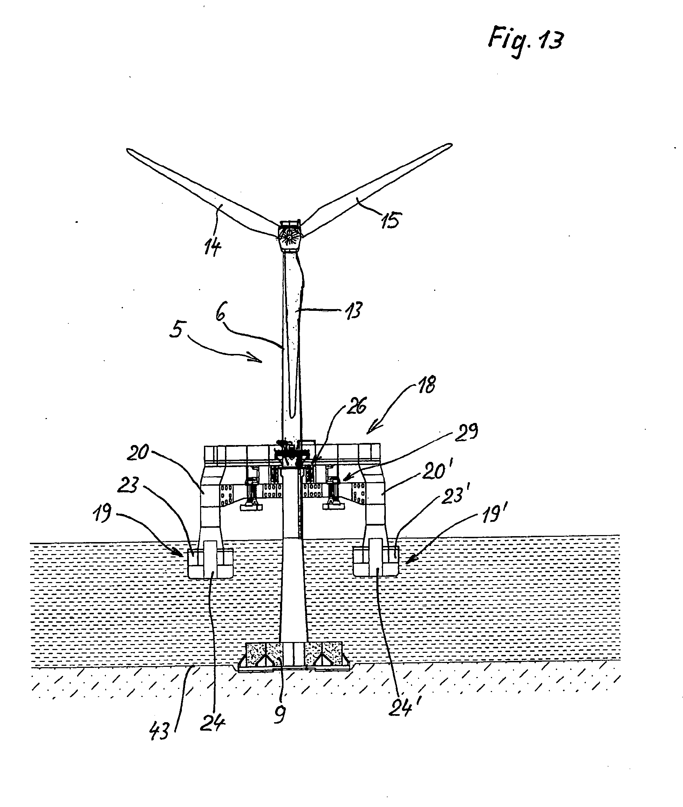

Durch das Abpumpen von Wasser aus den Hohlräumen der Rümpfe 19, 19' wird der Auftrieb des Transportschiffs 18 erhöht, so dass das Transportschiff 18 wieder auftaucht und eine für die Rückkehr geeignete Lage im Wasser einnimmt, wie dies in Fig. 13 gezeigt ist. Gleichzeitig mit dem Auftauchen des Transportschiffs 18 oder auch zeitlich davor oder danach können die Flaschenzüge 29 nach oben bewegt und die Stützen 24, 24' vertikal in die Rümpfe 19, 19' eingefahren werden. Sodann erfolgt das Lösen der Haltevorrichtung 26 vom Fundamentschaft 10, so dass das Transportschiff 18 die Rückfahrt zum Hafen antreten kann.

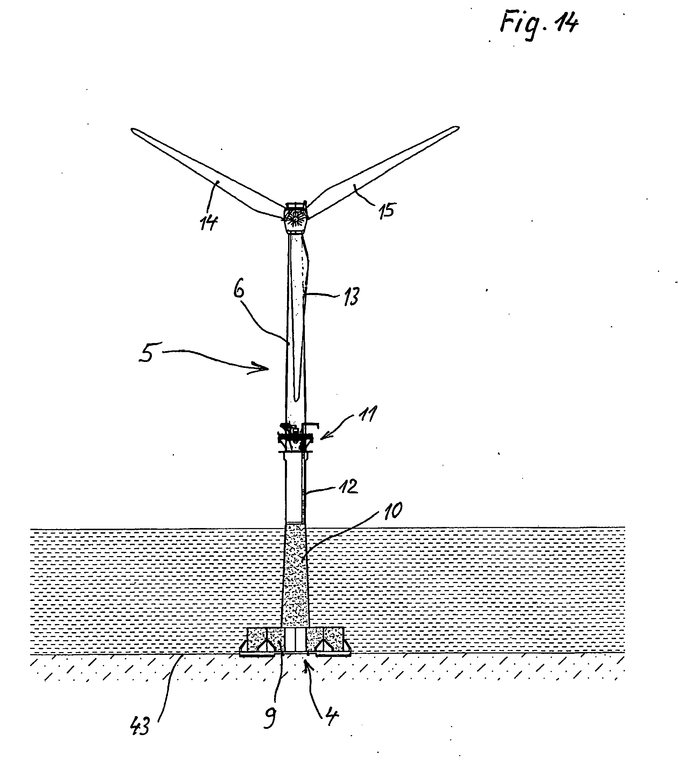

Wie in Fig. 14 gezeigt ist, kann optional eine nachlaufende Vergrößerung des Ballasts dadurch erfolgen, dass der hohle Fundamentschaft 10 bis etwa auf Höhe des normalen Niveaus der Wasseroberfläche mit Sand gefüllt wird, wodurch die Standsicherheit der Windenergieanlage 5 noch gesteigert wird. Eine Füllung des Fundamentschafts bis etwa zum Mastansatz ist möglich.

## Patentansprüche

1. Vorrichtung zum Transport und Installieren von eine Flachgründung (9) umfassende Anordnung einer Offshore-Windenergieanlage (5), wobei die Vorrichtung ein Transportschiff (18, 28) umfasst, wobei das Transportschiff (18, 28) mindestens zwei sich parallel zueinander an Längsseiten erstreckende Rümpfe (19, 19') umfasst, wobei die Rümpfe (19, 19') über quer zu diesen verlaufende Aussteifungen verbunden sind und in dem Transportschiff (18, 28) ein Aufnahmeraum (A) für die Flachgründung (9) vorgesehen ist, wobei über dem Aufnahmeraum (A) eine Öffnung (39) vorhanden ist, in der ein auf der Flachgründung (9) befindlicher und sich vertikal erstreckender Fundamentschaft (10) aufnehmbar ist und zwischen den Rümpfen (19, 19') ein solcher Abstand gegeben und der Aufnahmeraum (A) nach unten derart offen ist, dass die Flachgründung (9) mit dem Fundamentschaft (10) zwischen den Rümpfen (19, 19') hindurch vertikal nach unten ausbringbar ist und wobei auf jedem Rumpf (19, 19') mindestens zwei Türme (20, 20', 34, 34', 38, 38') angeordnet sind,
**dadurch gekennzeichnet, dass** diese Türme mindestens zwei Decks (21, 22) tragen, wobei unter einem Hauptdeck (21) ein Arbeitsdeck (22) angeordnet ist und das Arbeitsdeck (22) mit einer Haltevorrichtung (26) für den Fundamentschaft (10) und einer Hebevorrichtung (27) für die Flachgründung (9) ausgestattet ist und dass die Hebevorrichtung (27) mehrere Flaschenzüge (29) umfasst, die untere Rollensätze (31) aufweisen, die über Mittel mit der Flachgründung (9) verbindbar sind.

2. Vorrichtung nach Anspruch 1,
**dadurch gekennzeichnet, dass** die Rümpfe (19, 19') über einen Teil ihrer Länge eine Oberkante (35) aufweisen, die niedriger angeordnet ist, als die Oberkanten der Enden der Rümpfe (19, 19').

3. Vorrichtung nach Anspruch 1,
**dadurch gekennzeichnet, dass** das Transportschiff (18, 28) absenkbar ist und die Türme (20, 20', 34, 34', 38, 38') eine Höhe aufweisen, die größer ist als eine maximale Absenktiefe des Transportschiffs (18, 28).

4. Vorrichtung nach Anspruch 1,
**dadurch gekennzeichnet, dass** die Öffnung für die Aufnahme des Fundamentschafts (10) eine im Arbeitsdeck (22) angeordnete und sich in Längsrichtung des Transportschiffs (28) erstreckende U-förmige Öffnung (39) ist, die zu einer Querseite (40) des Arbeitsdecks (22) offen ist.

5. Vorrichtung nach einem der Ansprüche 1 bis 4,
**dadurch gekennzeichnet, dass** die Haltevorrichtung (26) eine Vielzahl von gleichmäßig um einen Kreismittelpunkt (M) angeordnete, hydraulisch betätigbare Zylinder (41) umfasst.

6. Vorrichtung nach einem der Ansprüche 1 bis 5,
**dadurch gekennzeichnet, dass** in den Rümpfen (19, 19') und/oder Türmen (20, 20', 34, 34', 38, 38') flutbare Tanks (23, 23') angeordnet und Ventilmittel und Pumpen zum Fluten und Abpumpen vorgesehen sind.

7. Vorrichtung nach einem der Ansprüche 1 bis 6,
**dadurch gekennzeichnet, dass** in den Rümpfen (19, 19') vertikal verfahrbare Stützen (24, 24', 36, 36', 37, 37') angeordnet sind.

8. Vorrichtung nach einem der Ansprüche 1 bis 7,
**dadurch gekennzeichnet, dass** das Transportschiff (18, 28) über eigene Antriebe an jedem Rumpf (19, 19') verfügt.

9. Verfahren zum Transport und zur Installation von eine Flachgründung (9) umfassende Anordnung einer Offshore-Windenergieanlage (5) mittels eines Transportschiffs (18, 28) nach einem der Ansprüche 1 bis 8,
**dadurch gekennzeichnet, dass** das Transportschiff (18, 28) relativ zu der auf einer Pier (3, 17) stehenden Windenergieanlage (5) derart bewegt wird, dass das Transportschiff (18, 28) die Flachgründung (9) in einem Aufnahmeraum (A) aufnimmt, danach eine Hebevorrichtung (27), die mehrere Flaschenzüge (29) umfasst, mit der Flachgründung (9) verbunden und die Flachgründung (9) angehoben wird, bis diese einen solchen Abstand zur Pier (3, 17) aufweist, dass diese frei über der Pier (3, 17) bewegbar ist und das Transportschiff (18, 28) durch Fluten der Tanks (23, 23') auf einen Transport-Tiefgang getaucht und die Anordnung mit der Flachgründung (9) über einer Wasseroberfläche (WOI) zu einem Bestimmungsort im Offshore-Bereich transportiert wird, an dem die Anordnung mit Flachgründung (9) mittels der Hebevorrichtung (27) abgesenkt wird.

10. Verfahren nach Anspruch 9,
**dadurch gekennzeichnet, dass** am Bestimmungsort in den Rümpfen (19, 19') befindliche Stützen (24, 24', 36, 36', 37, 37') vertikal nach unten verfahren werden und durch Flutung weiterer Tanks in den Rümpfen und/oder Türmen (20, 20', 34, 34') das Transportschiff (18, 28) so weit abgetaucht wird, bis es mittels der Stützen (24, 24', 36, 36', 37, 37') auf dem Meeresboden (43) aufsteht.

11. Verfahren nach Anspruch 10,
**dadurch gekennzeichnet, dass** der Verfahrensschritt des Absenkens der Flachgründung (9) mittels der Hebevorrichtung erst nach dem Positionieren des Transportschiffs (18, 28) mittels der Stützen (24, 24', 36, 36', 37, 37') auf dem Meeresboden (43) erfolgt.

12. Verfahren nach einem der Ansprüche 10 oder 11,
**dadurch gekennzeichnet, dass** während des Abtauchens des Transportschiffs (18, 28) Hohlräume in der Flachgründung (9) mit Sand gefüllt werden und dadurch das Fundamentgewicht erhöht wird.

13. Verfahren nach Anspruch 12,
**dadurch gekennzeichnet, dass** das Füllen der Hohlräume in der Flachgründung (9) von einem zweiten Schiff (45) über eine Zuführleitung (46) erfolgt.

14. Verfahren nach einem der Ansprüche 10 bis 13,
**dadurch gekennzeichnet, dass** nach der Installation der Windenergieanlage (5) auf dem Meeresboden (43) die Hebevorrichtung (27) von der Flachgründung (9) gelöst wird, die Stützen (24, 24', 36, 36', 37, 37') vertikal nach oben in die Rümpfe (19, 19') verfahren werden und durch Leerpumpen der Tanks (23, 23') das Transportschiff wieder angehoben wird.

## Claims

1. Apparatus for transporting and installing an arrangement of an offshore wind energy plant (5) comprising a raft foundation (9), wherein the apparatus comprises a transport ship (18, 28), wherein
the transport ship (18, 28) comprises at least two hulls (19, 19') extending parallel to each other on longitudinal sides, wherein the hulls (19, 19') are connected by means of reinforcements extending transversely to said hulls (19, 19'), and an accommodating space (A) for the raft foundation (9) is provided in the transport ship (18, 28), wherein there is an opening (39) above the accommodating space (A), in which opening (39) a foundation shaft (10) that is located on the raft foundation (9) and extends vertically can be accommodated, and there is such a distance between the hulls (19, 19') and the accommodating space (A) is open at the bottom in such a way that the raft foundation (9) can be discharged together with the foundation shaft (10) vertically downwards between the hulls (19, 19'), and wherein at least two towers (20, 20', 34, 34', 38, 38') are arranged on each hull (19, 19'),
**characterised in that** these towers carry at least two decks (21, 22), wherein a work deck (22) is arranged below a main deck (21) and the work deck (22) is equipped with a holding device (26) for the foundation shaft (10) and a lifting device (27) for the raft foundation (9), and the lifting device (27) comprises a plurality of pulleys (29), which have lower roller sets (31) that can be connected via means to the raft foundation (9).

2. Apparatus according to claim 1,
**characterised in that** the hulls (19, 19') have an upper edge (35) over part of their length, said upper edge (35) being arranged lower than the upper edges of the ends of the hulls (19, 19').

3. Apparatus according to claim 1,
**characterised in that** the transport ship (18, 28) can be lowered and the towers (20, 20', 34, 34', 38, 38') have a height which is greater than a maximum lowering depth of the transport ship (18, 28).

4. Apparatus according to claim 1,
**characterised in that** the opening to accommodate the foundation shaft (10) is a U-shaped opening (39) arranged in the work deck (22) and extending in the longitudinal direction of the transport ship (28), said opening (39) being open towards a transverse side (40) of the work deck (22).

5. Apparatus according to one of the claims 1 to 4,
**characterised in that** the holding device (26) comprises a plurality of hydraulically actuated cylinders (41) arranged regularly around a circle mid-point (M).

6. Apparatus according to one of the claims 1 to 5,
**characterised in that** floodable tanks (23, 23') are arranged in the hulls (19, 19') and/or towers (20, 20', 34, 34', 38, 38'), and valve means and pumps are provided for flooding and pumping out purposes.

7. Apparatus according to one of the claims 1 to 6,
**characterised in that** vertically movable supports (24, 24', 36, 36', 37, 37') are arranged in the hulls (19, 19').

8. Apparatus according to one of the claims 1 to 7,
**characterised in that** the transport ship (18, 28) has its own drives on each hull (19, 19').

9. Method for transporting and installing an arrangement of an offshore wind energy plant (5) comprising a raft foundation (9) by means of a transport ship (18, 28) according to one of the claims 1 to 8,
**characterised in that** the transport ship (18, 28) is moved relative to the wind energy plant (5) located on a pier (3, 17) in such a way that the transport ship (18, 28) accommodates the raft foundation (9) in an accommodating space (A), and then a lifting device (27) which comprises a plurality of pulleys (29) is connected to the raft foundation (9) and the raft foundation (9) is raised until it is at such a distance from the pier (3, 17) that it can be freely moved above the pier (3, 17) and the transport ship (18, 28) is submerged by flooding the tank (23, 23') to a transport draught and the arrangement with the raft foundation (9) is transported over a water surface (WOI) to a destination location in the offshore area, at which the arrangement with a raft foundation (9) is lowered by means of the lifting device (27).

10. Method according to claim 9,
**characterised in that** supports (24, 24', 36, 36', 37, 37') located at the destination location in the hulls (19, 19') are moved vertically downwards and, by flooding further tanks in the hulls and / or towers (20, 20', 34, 34'), the transport ship (18, 28) is submerged so far until it stands on the seabed (43) by means of the supports (24, 24', 36, 36', 37, 37').

11. Method according to claim 10,
**characterised in that** the method step of lowering the raft foundation (9) by means of the lifting apparatus is realised only after positioning of the transport ship (18, 28) by means of the supports (24, 24', 36, 36', 37, 37') on the seabed (43).

12. Method according to one of the claims 10 or 11,
**characterised in that**, during the submerging of the transport ship (18, 28), hollow spaces in the raft foundation (9) are filled with sand and the foundation weight is thereby increased.

13. Method according to claim 12,
**characterised in that** filling of the hollow spaces of the raft foundation (9) is realised by a second ship (45) via a supply line (46).

14. Method according to one of the claims 10 to 13,
**characterised in that**, after installation of the wind energy plant (5) on the seabed (43), the lifting device (27) is released from the raft foundation (9), the supports (24, 24', 36, 36', 37, 37' are moved vertically upwards into the hulls (19, 19') and the transport ship is raised again by pumping out the tanks (23, 23').

## Revendications

1. Dispositif pour le transport et l'installation d'un agencement d'une éolienne offshore pourvu d'une fondation superficielle (9), étant précisé que le dispositif comprend un
navire transporteur (18, 28), que le navire transporteur (18, 28) comprend au moins deux coques (19, 19') parallèles qui s'étendent sur les côtés longitudinaux, que les coques (19, 19') sont reliées par des raidisseurs transversaux et qu'il est prévu dans le navire transporteur (18, 28) un logement (A) pour la fondation superficielle (9), qu'il est prévu dans le logement (A) une ouverture (39) dans laquelle peut être logé un fût de socle (10) qui se trouve sur la fondation superficielle (9) et qui s'étend à la verticale, et qu'il y a entre les coques (19, 19') une telle distance et que le logement (A) est ouvert vers le bas de telle sorte que la fondation superficielle (9) avec le fût de socle (10) est apte à être installée à la verticale vers le bas en passant entre les coques (19, 19'), et qu'il est prévu sur chaque coque (19; 19') au moins deux colonnes (20, 20', 34, 34', 38, 38'),
**caractérisé en ce que** ces colonnes portent au moins deux ponts (21, 22), étant précisé qu'un pont de travail (22) est disposé sous un pont principal (21), et que le pont de travail (22) est équipé d'un dispositif de fixation (26) pour le fût de socle (10), et d'un dispositif de levage (27) pour la fondation superficielle (9), et **en ce que** le dispositif de levage (27) comprend plusieurs palans (29) qui présentent des jeux de poulies inférieurs (31) aptes à être reliés à la fondation superficielle par des moyens.

2. Dispositif selon la revendication 1,
**caractérisé en ce que** les coques (19, 19') présentent sur une partie de leur longueur un bord supérieur (35) qui est disposé plus bas que les bords supérieurs des extrémités des coques (19, 19').

3. Dispositif selon la revendication 1,
**caractérisé en ce que** le navire transporteur (18, 28) est apte à être abaissé et les colonnes (20, 20', 34, 34', 38, 38') présentent une hauteur qui est supérieure à une profondeur d'abaissement maximale du navire transporteur (18, 28).

4. Dispositif selon la revendication 1,
**caractérisé en ce que** l'ouverture pour loger le fût de socle (10) est une ouverture en U (39) qui est disposée dans le pont de travail (22), qui s'étend dans le sens longitudinal du navire transporteur (28) et qui est ouverte vers le côté transversal (40) du pont de travail (22).

5. Dispositif selon l'une des revendications 1 à 4,
**caractérisé en ce que** le dispositif de fixation (26) comprend une multiplicité de cylindres (41) à commande hydraulique qui sont disposés uniformément autour d'un centre de cercle (M).

6. Dispositif selon l'une des revendications 1 à 5,
**caractérisé en ce que** des réservoirs (23, 23') aptes à être remplis sont disposés dans les coques (19, 10') et/ou les colonnes (20, 20', 34, 34', 38, 38'), et il est prévu des moyens formant vannes et des pompes pour le remplissage et l'évacuation par pompe.

7. Dispositif selon l'une des revendications 1 à 6,
**caractérisé en ce que** des supports (24, 24', 36, 36', 37, 37') mobiles verticalement sont disposés dans les coques (19, 19').

8. Dispositif selon l'une des revendications 1 à 7,
**caractérisé en ce que** le navire transporteur (18, 28) dispose de ses propres entraînements sur chaque coque (19, 19').

9. Procédé pour le transport et l'installation d'un agencement d'une éolienne offshore pourvu d'une fondation superficielle (9), à l'aide d'un navire transporteur (18, 28) selon l'une des revendications 1 à 8,
**caractérisé en ce que** le navire transporteur (18, 28) est déplacé, par rapport à l'éolienne (5) placée sur une plate-forme (3, 17), de telle sorte que ledit navire transporteur (18, 28) reçoive la fondation superficielle (9) dans un logement (29), puis un dispositif de levage (27) qui comprend plusieurs palans (29) est relié à la fondation superficielle (9) et cette dernière est soulevée jusqu'à ce qu'elle présente par rapport à la plate-forme (3, 17) une distance telle qu'elle puisse être déplacée librement au-dessus de la plate-forme (3, 17), et le navire transporteur (18, 28) est plongé jusqu'à un tirant d'eau de transport grâce au remplissage des réservoirs (23, 23'), et l'agencement avec la fondation superficielle (9) est transporté par surface d'eau (WOI) jusqu'à un lieu de destination en zone offshore, où ledit agencement avec la fondation superficielle (9) est abaissé à l'aide du dispositif de levage (27).

10. Procédé selon la revendication 9,
**caractérisé en ce qu'**au lieu de destination, les supports (24, 24', 36, 36', 37, 37') qui se trouvent dans les coques (19, 19') sont déplacés à la verticale vers le bas, et le navire transporteur (18, 28), grâce au remplissage d'autres réservoirs dans les coques et/ou les colonnes (20, 20', 34, 34'), est abaissé jusqu'à ce qu'il soit posé à l'aide des supports (24, 24', 36, 36', 37, 37') sur le fond marin (43).

11. Procédé selon la revendication 10,
**caractérisé en ce que** l'étape d'abaissement de la fondation superficielle (9) à l'aide du dispositif de levage n'a lieu qu'après le positionnement du navire transporteur (18, 28) sur le fond marin (43) à l'aide des supports (24, 24', 36, 36', 37, 37').

12. Procédé selon l'une des revendications 10 ou 11,
**caractérisé en ce que** pendant l'abaissement du navire transporteur (18, 28), des cavités prévues dans la fondation superficielle (9) sont remplies de sable, ce qui augmente le poids de la base.

13. Procédé selon la revendication 12,
**caractérisé en ce que** le remplissage des cavités prévues dans la fondation superficielle (9) est réalisé par un second navire (45) par l'intermédiaire d'une conduite d'amenée (46).

14. Procédé selon l'une des revendications 10 à 13,
**caractérisé en ce qu'**après l'installation de l'éolienne (5) sur le fond marin (43), le dispositif de levage (27) est détaché de la fondation superficielle (9), les supports (24, 24', 36, 36', 37, 37') sont déplacés à la verticale vers le haut et rentrés dans les coques (19, 19'), et le navire de transport est relevé grâce au pompage des réservoirs (23, 23').
